# EUROPEAN PATENT SPECIFICATION

(11) **EP 1 982 775 B1**
(45) Date of publication and mention of the grant of the patent: **21.10.2009**
(21) Application number: 08152291.4
(22) Date of filing: 05.03.2008
(51) Int. Cl.: B08B 3/00

(54) **Combined intensive washing device for spray guns and their components**
Kombinierte Intensivwaschvorrichtung für Sprühpistolen und ihre Bauteile
Dispositif de nettoyage intensif combiné pour pistolets à peinture et leurs composants

(30) Priority: 07.03.2007 IT MI20070450
(43) Date of publication of application: 22.10.2008
(73) Proprietor: Rosauto S.r.l., 36054 Montebello Vicentino, (Vicenza) (IT)
(72) Inventor: Rosa, Giuseppe, 36050 Montorso (Vicenza) (IT)
(74) Representative: Martegani, Franco

(56) References cited:
- EP-A- 0 443 421
- EP-A- 1 574 262
- EP-A- 1 602 412
- US-A1- 2002 170 978
- US-A1- 2004 200 504

## Description

The present invention refers to a combined intensive washing device for spray guns and their components.

In particular, the invention refers to an automatic and manual washing device, for spray guns operating with water based paints.

Known in the painting industry are both spray guns with cups and spray guns with direct suction, for applying paints or similar material on various products.

In particular, in the type provided with a cup, a spray gun mixes compressed air with a paint supplied by a container, or cup. The compressed air jet allows spraying the atomised paint externally. The air flow is controlled by a lever located on the gun handle.

For such type of guns, the washing step after use is particularly important in order to avoid sludge and paint residues when the guns are still wet, in such a manner to guarantee an ideal operation when the gun shall be used again.

A known technique currently commonly used regards the using a washing device comprising a vat, provided with a cover, in which the gun to be washed is placed. In the vat, around the gun, provided for are various nozzles which spray the washing liquid from all directions of the gun itself. Usually there are conical nozzles, whose flow is directed towards all the directions.

The spray gun is arranged at an ideal position and the washing nozzle is inserted into a paint supply channel which connects the gun and the cup.

The cup is disassembled and removed from the gun in advance, in such a manner to place also the latter into the washing device.

However, in case of water based paints it is convenient to be able to manufacture a combined device providing for both manual and automatic washing, alongside the possibility to collect and recycle the washing liquid, according to the modes preferred by the user.

Therefore, the Applicant provided for an automatic/manual combined washing system (European patent application EP 1602412) which provides for two simultaneous or separate modes depending on the user's requirements.

Though the abovementioned system operates excellently, it requires, in case of particularly dirty guns or in case of sludge hard to reach or dry, a considerable period of time for manual washing and or repetition of the automatic cycle with a significant waste of time for the performance of the washing operation.

The general objective of the present invention is to manufacture a washing device for spray guns and their components, capable of combining in a single apparatus the various operating and washing management functions providing within a short period of time an intensive washing regarding persistent dirt, or dry paint and in areas hardly accessible of the gun.

Another objective of the present invention is that of manufacturing a device capable of allowing the user to select the washing intensity to be used depending on the dirt to be removed.

Another objective of the present invention is that of manufacturing an extremely simple, inexpensive and particularly functional washing device.

Given the abovementioned objectives, according to the present invention, it was deemed important to manufacture a combined intensive washing device for spray guns and their components, having the characteristics outlined in the attached claims.

Structural and functional characteristics and advantages of the present invention with respect to the prior art shall be clearer and evident from the observation of the following description, with reference to the attached schematic drawings wherein:

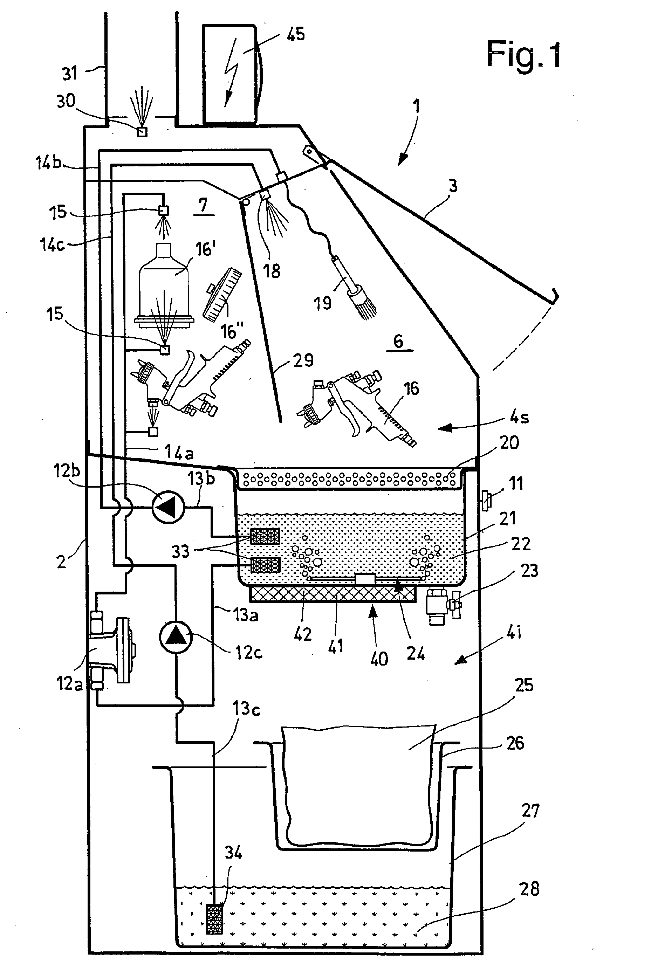

Figure 1 shows in a cross-sectional schematic side view a washing device manufactured according to the innovative principles of the invention itself;

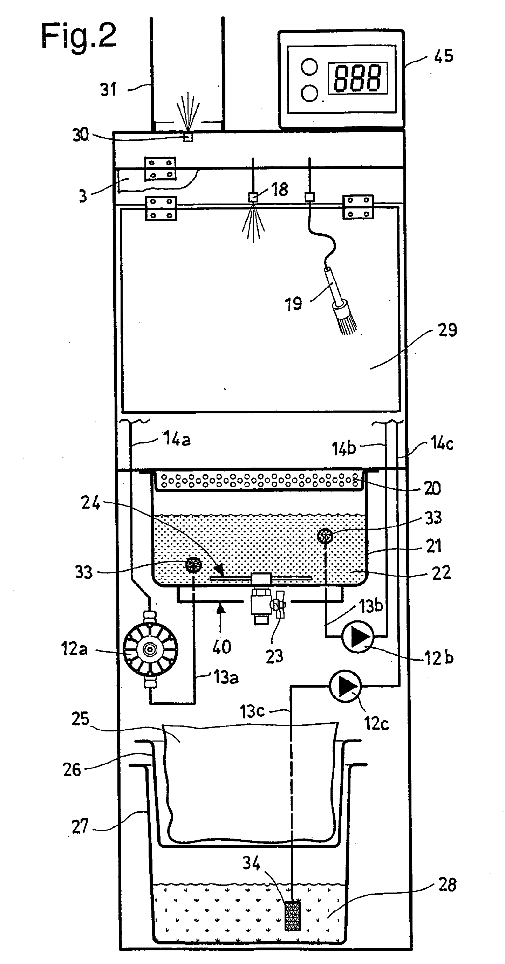

Figure 2 shows in a cross-sectional schematic and partial front view a washing device according to the present invention.

Referring to the figures, a combined washing device is indicated in its entirety by 1, and in the illustrated example, according to the present invention, it comprises a casing 2 of the device provided with a front sealing door 3.

The device has, separate from each other, an upper washing zone 4s and a collection and supply zone 4i arranged on the lower part.

The washing zone 4s is separated from the collection and supply zone 4i by means of a septum 5 fixed onto the casing 2 and integrated with a collection vat 21 for dirty water (recovered liquid) 22.

Placed on the collection vat 21 in a stable and removable manner is a plane 20, which can be at least partially perforated, intended for accommodating elements to be washed and for draining liquid towards the collection vat arranged beneath. Hence, this prevents leakage of an undesired amount of vapour from the collection vat 21.

The washing zone 4s is further subdivided into a first front zone 6 in proximity to the closing door 3 of the device and a second rear zone 7, separated by a moveable protection septum 29.

In the fist zone 6 manual washing operations are performed while the second zone 7 is suitably prepared with supports for automatic washing of a gun 16 and its components, such as for example the cup 16' and the cover 16" .

The automatic washing zone 7, and the brush 19, are used for pre-washing the guns and they are supplied by hot recycled liquid (product of specific washing).

Regarding this, the first zone 6 is provided with one or more sprayers 18 (only one illustrated) and preferably with a brush 19 supplied by a manual pre-washing liquid, coming from the recycled liquid 22.

The second washing zone 7 is provided with suitably directed automatic washing nozzles 15.

Furthermore, the casing is configured on the upper part to form a hood in such a manner to be able to channel and remove the vapours generated within it and it is, additionally, provided at its top, with a suction pipe 31 for the vapours to be released into the atmosphere.

In order to suction the vapours from the casing, provided at the entrance of the suction pipe 31 is a blowing device 30 facing outwards.

The collection and supply zone 4i has, starting from the top, the upper collection vat 21 which collects the liquid 22 or used water with paint residues, and comprises a mixing device 24 for the liquid mixture comprising water, paint and coagulant, the latter being added to the vat to trigger coagulation or flocculation of the paint for its subsequent separation from the liquid phase.

Fixed on the lower part at the bottom of the collection vat 21 is a heating plate 40, comprising resistors 41 fixed on a bearing element 42.

Such heating plate 40 connected to the power supply system (not illustrated) provides for, when an intensive washing is required, a heating of the vat 21 and of the liquid therein held to convey it heated to both washing zones 6, 7.

Furthermore, the collection vat is provided with a discharge valve 23.

Arranged beneath the collection vat 21, is a bag filter 25 adapted to receive the liquid or water already used 22 (the water/paint mixture and the coagulated paint) to separate the coagulated solid phase.

The bag filter 25 is accommodated and supported inside a perforated container 26 through which the filtered water 28 passes into the clean water container 27 arranged beneath.

A first pump 12a, preferably a membrane pump is prepared to suction the mixture of the already used water or recovered liquid 22 possibly heated in the collection vat 21 through a first line 13a, prior to filtration by means of a filter 33 for already used water.

From the first pump 12a the possibly heated liquid suctioned from the collection vat 21, that is the one already used, is conveyed through a line 14a to the automatic washing nozzles 15.

A second pump 12b is prepared to suction the already used water mixture or recovered liquid 22, possibly heated in the collection vat 21, through a second line 13b, prior to filtration by means of a filter 33 for already used water.

From the second pump 12b the liquid suctioned from the collection vat 21, that is the one already used, is conveyed through a line 14b to said brush 19 for pre-washing the parts in the first washing zone 6.

Furthermore, a third pump 12c is provided connected through a clean water pipe 13c directly to the clean water container 27.

Such clean water pipe 13c has, at the end submerged into the water 28 of the clean water container 27, a clean water filter 34.

From the third pipe 12c the clean water is supplied by means of a clean water pipe 14c to the first manual washing zone 6 and in particular, depending on the requirements, to a sprayer 18, as illustrated, or to additional sprayers 18, and also to additional devices which can be advantageously provided in such zone.

Additionally, the device is provided with a timer 11 programmable to perform the automatic washing cycle (zone 7) according to the preferred modes (heated or non-heated).

Furthermore an electric panel 45 is provided, for setting and controlling the resistor temperature 40.

According to the description outlined above with reference to the figure, it is clear how a combined washing device for spray guns and their components according to the invention is particularly useful and advantageous, due to the possibility to use a special hot liquid, hence leading to ideal operating performance. The objectives mentioned in the introduction of the description are thus attained.

The scope of protection of the invention is delimited by the attached claims.

## Claims

1. Combined washing device (1) for spray guns(16) and their components, cup and cover (16',16") comprising a casing (2) provided with a front sealing door and designed to accommodate a washing zone (4s) within it and a collection zone (4i), the washing zone being subdivided into a first manual washing zone (6) and a second automatic washing zone (7) the collection zone (4i) comprises a collection vat (21) which collects the already used washing liquid (22) , and, arranged beneath said collection vat (21), a bag filter (25) adapted to receive the already used washing liquid (22) to separate its solid components and transfer the filtered liquid (28) to a clean liquid container (27), the device being further provided with suction means (12a,12b,12c) adapted for suctioning the already used (22) or clean (28) liquid respectively from the vat (21) of the already used water or from the clean water container (27) and convey it to the washing zones (6,7), **characterized in that** the device being further provided with a heating plate (40) fixed on the lower part at the bottom of the collection vat (21).

2. Combined washing device (1) according to claim 1, **characterised in that** said heating plate (40) comprises resistors (41) fixed on a bearing element (42) or alternatively sunk into said bearing element (42) made if necessary as a form of support.

3. Combined washing device (1) according to claim 1, **characterised in that** said suction means comprise:
- a first pump (12a), preferably a membrane pump, prepared to suction the water or liquid mixture (22) possibly heated already used from the collection vat (21) through a first line (13a) and convey it through a line (14a) to said automatic washing second zone (7);
- a second pump (12b) prepared to suction the mixture of already used water or recovered liquid (22), possibly heated in the collection vat (21), through a second line (13b), in the first manual washing zone (6) ;
- a third pump (12c) provided connected through a clean water pipe (13c) directly to the clean water container (27) for supplying clean water through a clean water pipe (14c) to the first manual washing zone (6);

4. Combined washing device (1) according to claim 3, **characterised in that** said line (14a) supplies the mixture of already used water (22) from the collection vat (21) to a plurality of automatic washing nozzles (15) .

5. Combined washing device (1) according to claim 3, **characterised in that** said second pump (12b) conveys the liquid suctioned from the collecting vat (21) to a brush (19) for washing the parts.

6. Combined washing device (1) according to claim 3, **characterised in that** said third pump (12c) supplies clean water through a clean water pipe (14c) to at least one sprayer (18) or to additional sprayers (18), or to additional devices that can be advantageously provided in the first manual washing zone (6).

7. Combined washing device (1) according to claim 4, **characterised in that** said first line (13a) and second line (13b) suction the mixture of the already used water or recovered liquid (22) possibly heated in the collection vat (21) prior to filtration by means of the relative dirty water filter (33).

8. Combined washing device (1) according to claim 4, **characterised in that** said clean water pipe (13c) has at the end submerged into the clean water (28) of the clean water container, a clean water filter (34).

9. Combined washing device (1) according to claim 1, **characterised in that** said collection vat (21) is provided with a mixing device (24) for mixing water, paint and coagulant.

10. Combined washing device (1) according to claim 1, **characterised in that** said bag filter (25) is accommodated and supported inside a perforated container (26) through which the filtered water (28) passes into the clean water container (27) arranged beneath.

11. Combined washing device (1) according to claim 1, **characterised in that** said device is provided with a timer (11) programmable to perform the automatic washing cycle according to the preferred modes, and with an electric panel (45), to set and control the electric resistor temperature (40).

## Patentansprüche

1. Kombinierte Waschvorrichtung (1) für Sprühpistolen (16) und deren Komponenten Gefäß und Abdeckung (16', 16"), umfassend ein Gehäuse (2), das mit einer vorderen abdichtenden Tür versehen und derart ausgebildet ist, um Platz für eine Waschzone (4s) darin und eine Sammelzone (4i) zu bieten, wobei die Waschzone in eine erste Handwaschzone (6) und eine zweite Automatikwaschzone (7) unterteilt ist, wobei die Sammelzone (4i) eine Sammelwanne (21) umfasst, die die bereits gebrauchte Waschflüssigkeit (22) sammelt, und unterhalb der Sammelwanne (21) eine Filtertasche (25) angeordnet ist, die derart angepasst ist, um die bereits gebrauchte Waschflüssigkeit (22) aufzunehmen und ihre festen Bestandteile zu trennen und die gefilterte Flüssigkeit (28) an einen Behälter (27) für reine Flüssigkeit zu übertragen, wobei die Vorrichtung ferner mit einem Saugmittel (12a, 12b, 12c) versehen ist, das zum Saugen der bereits gebrauchten (22) bzw. reinen (28) Flüssigkeit von der Wanne (21) des bereits gebrauchten Wassers oder von dem Reinwasserbehälter (27) und zum Fördern desselben zu den Waschzonen (6, 7) angepasst ist,
**dadurch gekennzeichnet, dass**
die Vorrichtung ferner mit einer Heizplatte (40) versehen ist, die an dem unteren Teil an dem Boden der Sammelwanne (21) angebracht ist,

2. Kombinierte Waschvorrichtung (1) nach Anspruch 1,
**dadurch gekennzeichnet, dass**
die Heizplatte (40) Widerstände (41) umfasst, die an einem Trägerelement (42) befestigt sind oder alternativ in das Trägerelement (42) versenkt sind, das nach Bedarf als eine Stützform ausgebildet ist.

3. Kombinierte Waschvorrichtung (1) nach Anspruch 1,
**dadurch gekennzeichnet, dass**
das Saugmittel umfasst:
- eine erste Pumpe (12a), bevorzugt eine Membranpumpe, die eingerichtet ist, um das Wasser oder das Flüssigkeitsgemisch (22) möglicherweise erwärmt und bereits gebraucht von der Sammelwanne (21) durch eine erste Leitung (13a) zu saugen und dieses durch eine Leitung (14a) an die zweite Automatikwaschzone (7) zu fördern;
- eine zweite Pumpe (12b), die eingerichtet ist, um das Gemisch von bereits gebrauchtem Wasser oder rückgewonnener Flüssigkeit (22), das möglicherweise in der Sammelwanne (21) erwärmt ist, durch eine zweite Leitung (13b) in die erste Handwaschzone (6) zu saugen;
- eine dritte Pumpe (12c), die durch ein Reinwasserrohr (13c) direkt mit dem Reinwasserbehälter (27) verbunden vorgesehen ist, um reines Wasser durch ein Reinwasserrohr (14c) an die erste Handwaschzone (6) zu liefern;

4. Kombinierte Waschvorrichtung (1) nach Anspruch 3,
**dadurch gekennzeichnet, dass**
die Leitung (14a) das Gemisch von bereits gebrauchtem Wasser (22) von der Sammelwanne (21) zu mehreren Automatikwaschdüsen (15) liefert.

5. Kombinierte Waschvorrichtung (1) nach Anspruch 3,
**dadurch gekennzeichnet, dass**
die zweite Pumpe (12b) die von der Sammelwanne (21) gesaugte Flüssigkeit zu einer Bürste (19) zum Waschen der Teile fördert,

6. Kombinierte Waschvorrichtung (1) nach Anspruch 3,
**dadurch gekennzeichnet, dass**
die dritte Pumpe (12c) reines Wasser durch ein Reinwasserrohr (14c) an zumindest eine Sprüheinrichtung (18) oder an zusätzliche Sprüheinrichtungen (18) oder an zusätzliche Vorrichtungen liefert, die vorteilhafterweise in der ersten Handwaschzone (6) vorgesehen sein können.

7. Kombinierte Waschvorrichtung (1) nach Anspruch 4,
**dadurch gekennzeichnet, dass**
die erste Leitung (13a) und die zweite Leitung (13b) das Gemisch des bereits gebrauchten Wassers oder der rückgewonnenen Flüssigkeit (22), das in der Sammelwanne (21) möglicherweise erwärmt ist, vor einer Filtration mittels des Filters (33) für relativ schmutziges Wasser saugen.

8. Kombinierte Waschvorrichtung (1) nach Anspruch 4,
**dadurch gekennzeichnet, dass**
das Reinwasserrohr (13c) an dem Ende einen in das reine Wasser (28) des Reinwasserbehälters getauchten Reinwasserfilter (34) aufweist.

9. Kombinierte Waschvorrichtung (1) nach Anspruch 1,
**dadurch gekennzeichnet, dass**
die Sammelwanne (21) mit einer Mischvorrichtung (24) zum Mischen von Wasser, Farbe und einem Koagulationsmittel versehen ist.

10. Kombinierte Waschvorrichtung (1) nach Anspruch 1,
**dadurch gekennzeichnet , dass**
die Filtertasche (25) innerhalb eines mit Durchbrechungen versehenen Behälters (26) aufgenommen und getragen ist, durch die das gefilterte Wasser (28) in den darunter angeordneten Reinwasserbehälter (27) gelangt.

11. Kombinierte Waschvorrichtung (1) nach Anspruch 1,
**dadurch gekennzeichnet, dass**
die Vorrichtung mit einem Zeitgeber (11), der so programmierbar ist, um den Automatikwaschzyklus gemäß der bevorzugten Betriebsarten auszuführen, und mit einem elektrischen Bedienfeld (45) versehen ist, um die Temperatur (40) des elektrischen Widerstandes einzustellen und zu steuern.

## Revendications

1. Dispositif de lavage combiné (1) pour pistolets pulvérisateurs (16) et leurs composants, boîtier et couvercle (16', 16") comprenant un capot (2) pourvu d'une porte d'étanchéité avant et conçu pour renfermer une zone de lavage (4s) et une zone de collecte (4i), la zone de lavage étant subdivisée en une première zone de lavage manuel (6) et une deuxième zone de lavage automatique (7), la zone de collecte (4i) comprend une cuve de collecte (21) qui recueille le liquide de lavage déjà utilisé (22), et, placé sous ladite cuve de collecte (21), un filtre à sac (25) adapté pour recevoir le liquide de lavage déjà utilisé (22) pour séparer ses composants solides et transférer le liquide filtré (28) vers un récipient à liquide propre (27), le dispositif étant en outre pourvu d'un moyen d'aspiration (12a, 12b, 12c) adapté pour aspirer le liquide déjà utilisé (22) ou propre (28) respectivement dans la cuve (21) de l'eau déjà utilisée ou dans le récipient d'eau propre (27) et pour l'envoyer dans les zones de lavage (6, 7), **caractérisé en ce que** le dispositif est en outre pourvu d'une plaque chauffante (40) fixée sur la partie inférieure au fond de la cuve de collecte (21).

2. Dispositif de lavage combiné (1) selon la revendication 1, **caractérisé en ce que** ladite plaque chauffante (40) comprend des résistances (41) fixées sur un élément de support (42) ou alternativement plongées dans ledit élément de support (42) réalisé si nécessaire sous la forme d'un support.

3. Dispositif de lavage combiné (1) selon la revendication 1, **caractérisé en ce que** ledit moyen d'aspiration comprend :
- une première pompe (12a), de préférence une pompe à membrane, préparée pour aspirer l'eau ou le mélange liquide (22) éventuellement chauffé déjà utilisé dans la cuve de collecte (21) par une première conduite (13a) et pour l'envoyer dans une conduite (14a) menant à ladite deuxième zone de lavage automatique (7) ;
- une deuxième pompe (12b) préparée pour aspirer le mélange d'eau déjà utilisée ou le liquide récupéré (22), éventuellement chauffé dans la cuve de collecte (21), par une deuxième conduite (13b), dans la première zone de lavage manuel (6) ;
- une troisième pompe (12c) connectée par le biais d'un tuyau d'eau propre (13c) directement au récipient à eau propre (27) pour fournir de l'eau propre par un tuyau d'eau propre (14c) à la première zone de lavage manuel (6).

4. Dispositif de lavage combiné (1) selon la revendication 3, **caractérisé en ce que** ladite conduite (14a) envoie le mélange d'eau déjà utilisée (22) de la cuve de collecte (21) vers une pluralité de buses de lavage automatique (15),

5. Dispositif de lavage combiné (1) selon la revendication 3, **caractérisé en ce que** ladite deuxième pompe (12b) envoie le liquide aspiré dans la cuve de collecte (21) vers une brosse (19) pour laver les pièces.

6. Dispositif de lavage combiné (1) selon la revendication 3, **caractérisé en ce que** ladite troisième pompe (12c) fournit de l'eau propre par l'intermédiaire d'un tuyau d'eau propre (14c) à au moins un pulvérisateur (18) ou à des pulvérisateurs supplémentaires (18), ou à des dispositifs supplémentaires qui peuvent être placés avantageusement dans la première zone de lavage manuel (6).

7. Dispositif de lavage combiné (1) selon la revendication 4, **caractérisé en ce que** ladite première conduite (13a) et ladite deuxième conduite (13b) aspirent le mélange de l'eau déjà utilisée ou le liquide récupéré (22) éventuellement chauffé dans la cuve de collecte (21) avant qu'il ne soit filtré au moyen du filtre à eau relativement sale (33).

8. Dispositif de lavage combiné (1) selon la revendication 4, **caractérisé en ce que** ledit tuyau d'eau propre (13c) comporte, à l'extrémité immergée dans l'eau propre (28) du récipient à eau propre, un filtre à eau propre (34).

9. Dispositif de lavage combiné (1) selon la revendication 1, **caractérisé en ce que** ladite cuve de collecte (21) est pourvue d'un dispositif mélangeur (24) pour mélanger de l'eau, de la peinture et un coagulant.

10. Dispositif de lavage combiné (1) selon la revendication 1, **caractérisé en ce que** ledit filtre à sac (25) est logé et supporté à l'intérieur d'un récipient perforé (26) à travers lequel l'eau filtrée (28) passe dans le récipient à eau propre (27) placé dessous.

11. Dispositif de lavage combiné (1) selon la revendication 1, **caractérisé en ce que** ledit dispositif est pourvu d'un programmateur (11) programmable pour effectuer le cycle de lavage automatique selon les modes préférés, et d'un pupitre électrique (45), pour régler et commander la température des résistances électriques (40).
